# EUROPÄISCHE PATENTSCHRIFT

(11) **EP 2 865 908 B1**
(45) Veröffentlichungstag und Bekanntmachung des Hinweises auf die Patenterteilung: **22.03.2017**
(21) Anmeldenummer: 14189920.3
(22) Anmeldetag: 22.10.2014
(51) Int. Cl.: F16C 33/36, F16C 19/54

(54) **Lageranordnung**
Bearing assembly
Système de palier

(30) Priorität: 24.10.2013 DE 102013221602
(43) Veröffentlichungstag der Anmeldung: 29.04.2015
(73) Patentinhaber: Aktiebolaget SKF, 415 50 Göteborg (SE)
(72) Erfinder: Hofmann, Katrin, 97355 Wiesenbronn (DE); Kuhstrebe, Jochen, 97318 Biebelried (DE); Stubenrauch, Arno, 97491 Aidhausen (DE); Thangavelu, Malinipriya, 97421 Schweinfurt (DE); Olschewski, Armin, 97422 Schweinfurt (DE)
(74) Vertreter: Kuhstrebe, Jochen

(56) Entgegenhaltungen:
- EP-A1- 1 348 879
- DE-A1-102010 040 748
- GB-A- 1 254 418

## Beschreibung

Ausführungsbeispiele beziehen sich auf das Gebiet der Lagerung von rotierenden Wellen und insbesondere auf eine Lageranordnung.

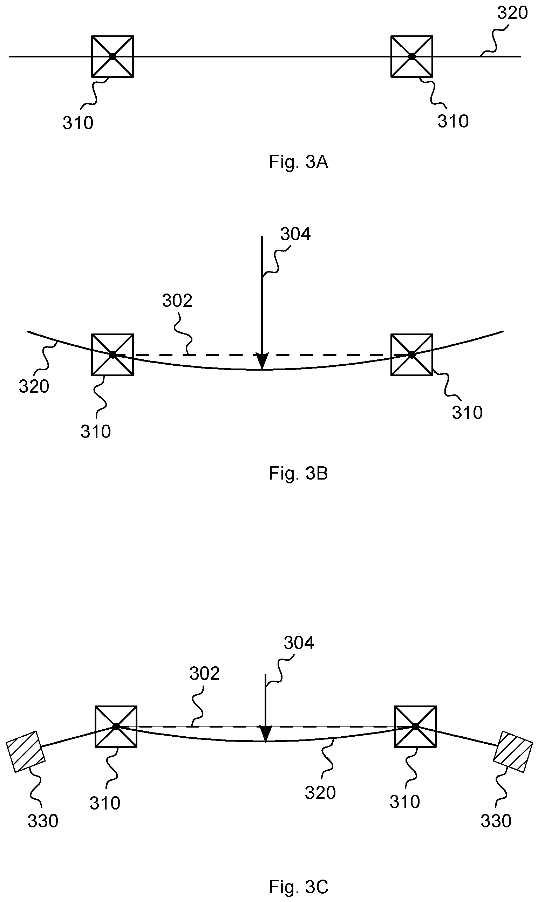

Bei der Lagerung von rotierenden Wellen kann es durch unterschiedliche Belastungen der Welle zu Verformung der Welle und dadurch resultierend auch zu Verformungen innerhalb der Lageranordnungen kommen, die die rotierbare Welle lagern. Fig. 3a zeigt ein Beispiel für eine unbelastete Welle 320, die von zwei Lageranordnungen 310 gelagert ist. Durch eine mittige Belastung 304 (kann aber auch außermittig belastet sein) kommt es zu einer Verbiegung der Welle 320 von einem unbelasteten Zustand 302 der Welle 320 weg, wie es in Fig. 3b gezeigt ist. Alternativ kann die Umlaufbiegung der Welle 320 aufgrund rotierender Massen 330 eine andere Form der Wellenzapfen-Umlaufbiegung an den Enden der Welle ergeben, wie es in Fig. 3c gezeigt ist.

Durch die Verformung der Welle kann es zu daraus resultierenden Verformungen innerhalb der Lageranordnungen kommen. Durch solche Verformungen einer Lageranordnung kann es zu einem erhöhten Verschleiß und daraus folgend zu einer geringeren Lagerlebensdauer kommen.

Beispielsweise zeigt die Druckschrift GB 1254418 ein Wälzlager mit Zwischenring.

Es besteht daher der Bedarf, eine Lageranordnung zu schaffen, die eine Reduktion des Verschleißes und/oder eine Erhöhung der Lagerlebensdauer ermöglicht.

Dieser Bedarf wird durch eine Lageranordnung gemäß Anspruch 1 gedeckt.

Einige Ausführungsbeispiele beziehen sich auf eine Lageranordnung, die ein erstes Wälzlager und ein zweites Wälzlager aufweist. Das erste Wälzlager umfasst einen Innenring, der mit einer Welle verdrehfest verbindbar ist. Der Innenring des ersten Wälzlagers weist eine Lauffläche für Wälzkörper des ersten Wälzlagers auf. Das zweite Wälzlager umfasst einen Innenring der ebenfalls mit der Welle verdrehfest verbindbar ist. Der Innenring des zweiten Wälzlagers weist eine Lauffläche für Wälzkörper des zweiten Wälzlagers auf. Der Innenring des ersten Wälzlagers und der Innenring des zweiten Wälzlagers sind ausgebildet, sodass der Innenring des ersten Wälzlagers und der Innenring des zweiten Wälzlagers ausschließlich innerhalb eines Kontaktflächendurchmessers miteinander in Kontakt sind, der kleiner ist als ein Mittelwert eines maximalen Durchmessers der Lauffläche des Innenrings des ersten Wälzlagers und eines maximalen Außendurchmessers des Innenrings des ersten Wälzlagers und kleiner ist als ein Mittelwert eines maximalen Durchmessers der Lauffläche des Innenrings des zweiten Wälzlagers und eines maximalen Außendurchmessers des Innenrings des zweiten Wälzlagers, wenn der Innenring des ersten Wälzlagers und der Innenring des zweiten Wälzlagers direkt aneinander angrenzend angeordnet sind.

Durch die Ausbildung eines Spalts zwischen den Innenringen der Wälzlager kann verhindert werden, dass bei Verformung der Welle der Innenring in Richtung der Wälzkörper verformt wird und damit die Kontaktgeometrie im Wälzkontakt Rolle/Bord verändert wird. Eine solche Verformung könnte beispielsweise bedeuten, dass durch Verschleiß an Bord und/oder Rolle die erforderliche Laufzeit der Lager nicht erreicht werden kann. Durch den Spalt kann zwischen den Führungsborden der Innenringe ein Abstand erzeugt werden, sodass die Führungsborde der Innenringe bei Verformungen der Lageranordnung nicht mehr oder weniger gegeneinander drücken. Dadurch kann der Verschleiß gering gehalten werden und die Lagerlebensdauer erhöht werden.

Einige Ausführungsbeispiele beziehen sich auf eine Lageranordnung, bei der die beiden Wälzlager Kegelrollenlager in einer X-Anordnung sind. Dadurch kann mit geringem Aufwand eine solche Lageranordnung mit hoher Lagerlebensdauer implementiert werden.

Ausführungsbeispiele werden nachfolgend, bezugnehmend auf die beiliegenden Figuren, näher erläutert. Diese zeigen:
Fig. 1 eine schematische Darstellung einer Lageranordnung;
Fig. 2 eine schematische Darstellung einer weiteren Lageranordnung;
Fig. 3a bis 3c schematische Darstellungen von Wellenzuständen bei belasteten Wellen;
Fig. 4 eine schematische Darstellung eines Kegelrollenlagers in X-Anordnung; und
Fig. 5 eine schematische Darstellung einer Verformung einer Lageranordnung ohne Zwischenring.

Im Folgenden können bei unterschiedlichen, beschriebenen Ausführungsbeispielen teilweise für Objekte und Funktionseinheiten, die gleiche oder ähnliche funktionelle Eigenschaften aufweisen, gleiche Bezugszeichen verwendet werden. Ferner können zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Des Weiteren können optionale Merkmale der verschiedenen Ausführungsbeispiele miteinander kombinierbar oder zueinander austauschbar sein.

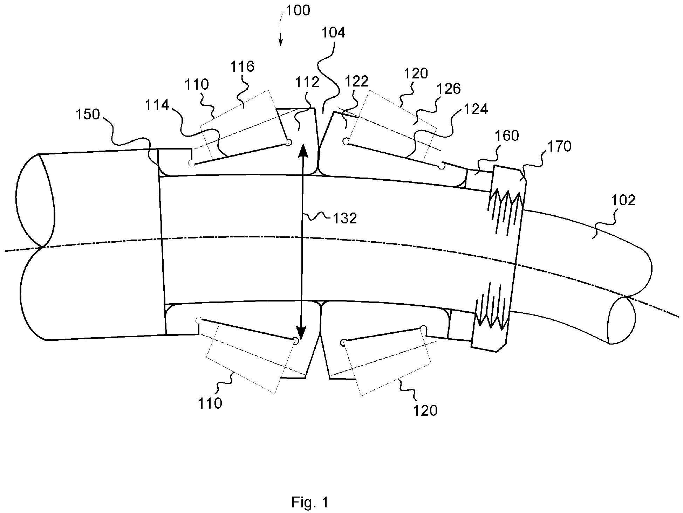

Fig. 1 zeigt eine schematische Darstellung einer Lageranordnung 100 gemäß einem Ausführungsbeispiel. Die Lageranordnung 100 weist ein erstes Wälzlager 110 und ein zweites Wälzlager 120 auf. Das erste Wälzlager 110 umfasst einen Innenring 112, der mit einer Welle 102 verdrehfest verbindbar ist. Der Innenring 112 des ersten Wälzlagers 110 weist eine Lauffläche 114 für Wälzkörper 116 des ersten Wälzlagers 110 auf. Das zweite Wälzlager 120 umfasst einen Innenring 122, der mit der Welle 102 ebenso verdrehfest verbindbar ist. Der Innenring 122 des zweiten Wälzlagers 120 weist eine Lauffläche 124 für Wälzkörper 126 des zweiten Wälzlagers 120 auf. Der Innenring 112 des ersten Wälzlagers 110 und der Innenring 122 des zweiten Wälzlagers 120 sind ausgebildet, sodass der Innenring 112 des ersten Wälzlagers 110 und der Innenring 122 des zweiten Wälzlagers 120 ausschließlich innerhalb eines Kontaktflächendurchmessers 132 miteinander in Kontakt sind, der kleiner ist als ein Mittelwert eines maximalen Durchmessers der Lauffläche 114 des Innenrings 112 des ersten Wälzlagers 110 und eines maximalen Außendurchmessers des Innenrings 112 des ersten Wälzlagers 110 und kleiner ist als ein Mittelwert eines maximalen Durchmessers der Lauffläche 124 des Innenrings 122 des zweiten Wälzlagers 120 und eines maximalen Außendurchmessers des Innenrings 122 des zweiten Wälzlagers 120, wenn der Innenring 112 des ersten Wälzlagers 110 und der Innenring 122 des zweiten Wälzlagers 120 direkt aneinander angrenzend (z.B. auf einer Welle) angeordnet sind.

Durch die Ausbildung der Innenringe der Wälzlager, sodass zwischen den Führungsborden der Innenringe ein Spalt 104 erzeugt wird, kann ermöglicht werden, dass diese bei Verformung der Welle 102 nicht oder deutlich weniger aufeinander gedrückt und verformt werden und auf die Wälzkörper drücken. Dadurch kann der Verschleiß deutlich reduziert und die Lagerlebensdauer deutlich erhöht werden.

Die Lageranordnung 100 kann zwei (das erste und das zweite) Wälzlager oder mehr Wälzlager aufweisen. Dabei können nur die Innenringe des ersten und des zweiten Wälzlagers ausgebildet sein, sodass zwischen den Führungsborden der Innenringe ein Spalt 104 vorhanden ist, oder entsprechend können auch zwischen allen oder einigen weiteren Innenringen der Wälzlager Spalte ausgebildet sein.

Das erste Wälzlager 110 und das zweite Wälzlager 120 weisen beispielsweise neben dem Innenring und den Wälzkörpern zumindest einen Außenring auf und können vom gleichen oder von unterschiedlichen Lagertyp (z.B. Kugellager, Kegelrollenlager, Schrägkugellager, Zylinderrollenlager oder Pendelrollenlager) sein. Beispielsweise können das erste Wälzlager 110 und das zweite Wälzlager 120 Kegelrollenlager sein. Dabei können das erste Wälzlager 110 und das zweite Wälzlager 120 beispielsweise in einer X-Anordnung (z.B. definiert durch Rotationsachsen der Wälzkörper eines Wälzlagers, die sich bezügliches dieses Wälzlagers an der dem jeweils anderen Wälzlager abgewandten axialen Seite schneiden) oder einer O-Anordnung (z.B. definiert durch Rotationsachsen der Wälzkörper eines Wälzlagers, die sich bezügliches dieses Wälzlagers an der dem jeweils anderen Wälzlager axial zugewandten Seite schneiden) angeordnet sein.

Sind das erste Wälzlager 110 und das zweite Wälzlager 120 vom gleichen Lagertyp können die beiden Wälzlager unterschiedlich ausgeführt sein (z.B. wegen asymmetrischer Belastung oder unterschiedlichem zur Verfügung stehenden Bauraum) oder auch in axialer Richtung symmetrisch zueinander konstruiert sein. Dadurch können beispielsweise die Kosten gering gehalten werden, da eine größere Stückzahl von gleichen Wälzlagern implementiert werden kann.

Die Innenringe der Wälzlager weisen beispielsweise zumindest auf einer axialen Seite ein radial über die Lauffläche hinausragendes Führungsbord (z.B. auch Lagerbord oder allgemein Bord genannt) auf. Ferner weist jeder der beiden Innenringe eine Lauffläche auf an der die Wälzkörper der Lager im Betrieb entlanglaufen oder -rollen. In anderen Worten, der Innenring 112 des ersten Wälzlagers 110 weist beispielsweise ein Führungsbord auf, das sich radial über die Lauffläche 114 des Innenrings 112 des ersten Wälzlagers 110 hinaus erstreckt und ausgebildet ist, um eine Bewegung der Wälzkörper 116 des ersten Wälzlagers 110 axial zu begrenzen. Ferner weist der Innenring 122 des zweiten Wälzlagers 120 ein Führungsbord auf, das sich radial über die Lauffläche 116 des Innenrings 122 des zweiten Wälzlagers 120 hinaus erstreckt und ausgebildet ist, um eine Bewegung der Wälzkörper 126 des zweiten Wälzlagers 120 axial zu begrenzen. Die Führungsbord bilden also beispielsweise eine Führung für eine Bewegung der Wälzkörper entlang der Laufflächen.

Die Laufflächen der Lagerringe können beispielsweise je nach Lagertyp parallel zu der Rotationsachse der Welle 102 verlaufen (z.B. bei einem Zylinderrollenlager) eine Teilfläche eines Torus sein (z.B. bei Kugellagern) oder zur Rotationsachse der Welle 102 unter einem festen Winkel geneigt sein (z.B. bei Kegelrollenlagern). Ein maximaler Durchmesser der Lauffläche eines Innenrings kann dementsprechend in axialer Richtung entlang der Lauffläche konstant sein (z.B. beim Zylinderrollenlager) oder in axialer Richtung variieren (z.B. beim Kugellager oder beim Kegelrollenlager). Der maximale Durchmesser entspricht dann jenem Durchmesser, der entlang der Lauffläche in axialer Richtung am größten ist.

Die axiale Richtung erstreckt sich beispielweise parallel zu der Rotationsachse der (unverformten) Welle 102 und die radiale Richtung erstreckt sich z.B. orthogonal zu der Rotationsachse der Welle 102.

Die Welle 102 kann ein beliebiger im Betrieb um seine Achse rotierender Bauteil einer Maschine oder Vorrichtung sein, in der eine Lageranordnung 100 nach dem beschriebenen Konzept zum Einsatz kommt. Die Lageranordnung 100 kann über die Innenringe der Wälzlager verdrehfest (z.B. keine relative Drehung zwischen der Welle und den Innenringen ohne Zerstörung oder Beschädigungen) verbunden werden und ist beispielsweise nicht Teil der Lageranordnung 100. Alternativ kann die Welle 102 optional auch Teil der Lageranordnung 100 sein.

Die Innenringe der beiden Wälzlager der Lageranordnung 100 können auf einer Welle aneinander anliegend angeordnet werden (z.B. ohne ein anderes Bauteil zwischen den Lagerringen, aber unter Vernachlässigung von Verbindungsmittel, wie z.B. Kleber). Dadurch kann die Lageranordnung 100 mit geringem axialen Bauraum implementiert werden. Die Innenringe können verdrehfest miteinander verbunden sein (z.B. verklebt) oder lose im Bereich einer sich maximal bis zu dem Kontaktflächendurchmesser 132 erstreckenden Kontaktfläche direkt aneinander anliegen.

Der Innenring 112 des ersten Wälzlagers 110 und der Innenring 122 des zweiten Wälzlagers 120 sind radial ausschließlich innerhalb eines Kontaktflächendurchmessers 132 miteinander in Kontakt. Der Kontaktflächendurchmessers 132 ist beispielsweise ein Außendurchmesser (z.B. maximaler oder mittlerer Außendurchmesser) einer sich im Wesentlich radial erstreckenden Kontaktfläche zwischen den Innenringen der beiden Wälzlager, wenn die Innenringe aneinander anliegen.

Der Kontaktflächendurchmesser 132 ist kleiner als ein Mittelwert (z.B. arithmetisches Mittel) eines maximalen Durchmessers der Lauffläche 114 des Innenrings 112 des ersten Wälzlagers 110 und eines maximalen Außendurchmessers (z.B. größte Ausdehnung in radialer Richtung) des Innenrings 112 des ersten Wälzlagers 110. Ferner ist der Kontaktflächendurchmesser 132 kleiner als ein Mittelwert eines maximalen Durchmessers der Lauffläche 124 des Innenrings 122 des zweiten Wälzlagers 120 und eines maximalen Außendurchmessers des Innenrings 122 des zweiten Wälzlagers 120. In anderen Worten, die Kontaktfläche kann sich radial bis zur Hälfte zwischen dem maximalen Durchmesser der Laufflächen und des maximalen Außendurchmessers der Innenringe erstrecken. Dadurch kann beispielsweise gewährleistet werden, dass zumindest teilweise ein Spalt 104 zwischen den Führungsborden der Innenringe, die sich über die Lauffläche radial hinaus erstrecken und eine Führung für die Wälzkörper bieten, erzeugt wird, in den sich die Führungsborde bei Verformung hineinbiegen können ohne gegen das andere Führungsbord zu drücken. Würde sich die Kontaktfläche weiter als bis zur Hälfte zwischen dem maximalen Durchmesser der Laufflächen und des maximalen Außendurchmessers der Innenringe erstrecken nach radial außen erstrecken, würde dieser Effekt beispielsweise zumindest abgeschwächt werden, da das eine Führungsbord auf das andere Führungsbord drücken würde.

In anderen Worten, der Innenring 112 des ersten Wälzlagers 110 und der Innenring 122 des zweiten Wälzlagers 120 können ausgebildet sein, sodass der Innenring 112 des ersten Wälzlagers 110 und der Innenring 122 des zweiten Wälzlagers 120 außerhalb des Kontaktflächendurchmessers 132 einen axialen Spalt 104 (oder Nut) bilden, wenn der Innenring 112 des ersten Wälzlagers 110 und der Innenring 122 des zweiten Wälzlagers 120 direkt aneinander angrenzend angeordnet sind.

Um einen axialen Spalt 104 zwischen den beiden Innenringen außerhalb des Kontaktflächendurchmessers 132 zu bilden, kann beispielsweise zumindest einer der beiden Innenringe oder auch beide Innenringe außerhalb des Kontaktflächendurchmessers 132 eine sich an die Kontaktfläche anschließende nicht radial erstreckende Seitenfläche oder einen nicht radial erstreckenden Teil einer Seitenfläche aufweisen.

Beispielsweise kann der Kontaktflächendurchmesser 132 optional auch kleiner als ein maximaler Durchmesser der Lauffläche 114 des Innenrings 112 des ersten Wälzlagers 110 und kleiner als ein maximaler Durchmesser der Lauffläche 124 des Innenrings 122 des zweiten Wälzlagers 120. Dadurch kann ein gegeneinanderdrücken der Führungsborde der Innenringe über die gesamte radiale Ausdehnung der Führungsborde bei Verformung verhindert werden.

Ferner kann der Kontaktflächendurchmesser 132 optional kleiner als ein Durchmesser der Lauffläche an einem Punkt oder einem Teil der Lauffläche sein, der dem Spalt 104 axial am nächsten liegt.

Der durch die aneinander anliegenden Innenringe der beiden Wälzlager gebildete Spalt 104 kann unterschiedliche Geometrien aufweisen. Der Spalt 104 kann beispielsweise eine (z.B. konstante, mittlere oder maximale) axiale Abmessung (z.B. axiale Ausdehnung, Breite oder axiale Länge) aufweisen, die kleiner ist als eine radiale Abmessung einer Kontaktfläche zwischen dem Innenring 112 des ersten Wälzlagers 110 und dem Innenring 122 des zweiten Wälzlagers 120. Dadurch kann ermöglicht werden, dass der Spalt 104 nur geringen axialen Bauraum benötigt. In anderen Worten, der Innenring 112 des ersten Wälzlagers 110 und der Innenring 122 des zweiten Wälzlagers 120 können ausgebildet sein, sodass ein maximaler axialer Abstand zwischen dem Innenring 112 des ersten Wälzlagers 110 und dem Innenring 122 des zweiten Wälzlagers 120 radial außerhalb des Kontaktflächendurchmessers 132 kleiner ist als eine radiale Abmessung einer Kontaktfläche zwischen dem Innenring 112 des ersten Wälzlagers 110 und dem Innenring 122 des zweiten Wälzlagers 120, wenn der Innenring 112 des ersten Wälzlagers 110 und der Innenring 122 des zweiten Wälzlagers 120 direkt aneinander angrenzend angeordnet sind. Alternativ kann der maximale axiale Abstand zwischen dem Innenring 112 des ersten Wälzlagers 110 und dem Innenring 122 des zweiten Wälzlagers 120 radial außerhalb des Kontaktflächendurchmessers 132 auch beispielsweise kleiner sein als 10 % (oder kleiner als 5% or kleiner als 1 %) der radialen Abmessung der Kontaktfläche zwischen dem Innenring 112 des ersten Wälzlagers 110 und dem Innenring 122 des zweiten Wälzlagers 120.

Die genauen Abmessungen des Spalts 104 können sich je nach Anwendungsbereich der Lageranordnung unterscheiden, da die Größe der Wälzlager in weiten Bereichen variieren kann. Für manche Anwendungen kann der Spalt 104 beispielsweise eine (maximale) axiale Abmessung von weniger als 0,5 mm (oder weniger als 0,3 mm, weniger als 0,2 mm oder weniger als 0,1 mm) aufweisen oder die axiale Abmessung kann zwischen 0,5 und 0,05 mm (oder zwischen 0,2 mm und 0,1 mm) liegen. In anderen Worten, der Innenring 112 des ersten Wälzlagers 110 und der Innenring 122 des zweiten Wälzlagers 120 können ausgebildet sein, sodass ein maximaler axialer Abstand zwischen dem Innenring 112 des ersten Wälzlagers 110 und dem Innenring 122 des zweiten Wälzlagers 120 radial außerhalb des Kontaktflächendurchmessers 132 (z.B. zwischen Kontaktflächendurchmesser und einem maximalen Durchmesser eines Führungsbords zumindest eines der beiden Innenringe) kleiner als beispielsweise 0,5 mm ist, wenn der Innenring 112 des ersten Wälzlagers 110 und der Innenring 122 des zweiten Wälzlagers 120 direkt aneinander angrenzend angeordnet sind

Der Spalt 104 kann beispielsweise eine V-förmig Geometrie aufweisen, wie es in Fig. 1 gezeigt ist. Bei einer V-Form kann im Bereich des Fußes des Bords, in welchem dieses die geringste Materialstärke aufweist, die Schwächung durch den Spalt 104 gering gehalten werden. Alternativ kann der Spalt 104 aber auch andere Geometrien aufweisen (z.B. U-förmig oder rechteckförmig). In anderen Worten, der Innenring 112 des ersten Wälzlagers 110 und der Innenring 122 des zweiten Wälzlagers 12 können ausgebildet sind, sodass der Innenring 112 des ersten Wälzlagers 110 und der Innenring 122 des zweiten Wälzlagers 120 radial außerhalb des Kontaktflächendurchmessers 132 einen beispielsweise V-förmig, U-förmig oder rechteckförmig Spalt 104 bilden.

In dem in Fig. 1 gezeigten Beispiel ist die Lageranordnung 100 optional auf einer Welle 102 mit einem axialen Anschlag 150 angeordnet. Die Lageranordnung 100 wird optional an einer dem axialen Anschlag 150 gegenüberliegenden Ende über eine Distanzscheibe 160 von einer Schraube oder Mutter 170 gegen den axialen Anschlag 150 gedrückt und so in ihrer Position fixiert.

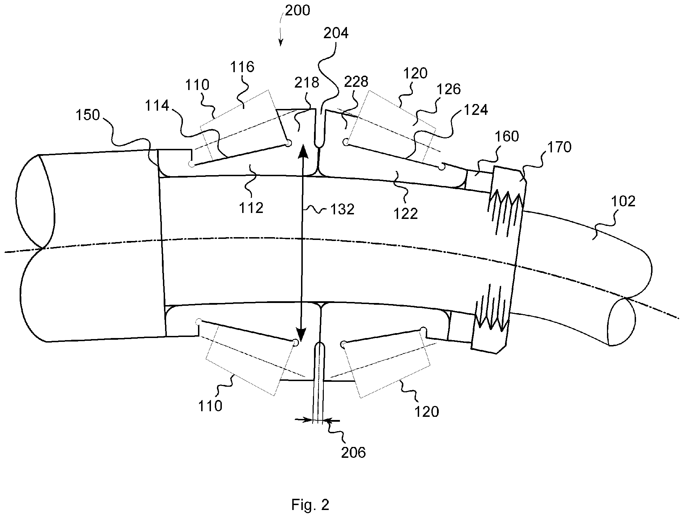

Fig. 2 zeigt eine schematische Darstellung einer weiteren Lageranordnung 200 gemäß einem Ausführungsbeispiel. Die Lageranordnung 200 entspricht im Wesentlichen dem Aufbau der Lageranordnung aus Fig. 1, sodass dementsprechend auch die vorherigen Ausführungen gelten. Die Innenringe der beiden Wälzlager der Lageranordnung 200 sind ausgebildet, sodass zwischen dem Führungsbord 218 des Innenrings 112 des ersten Wälzlagers 110 und dem Führungsbord 228 des Innenrings 122 des zweiten Wälzlagers 120 ein axialer Spalt 204 vorhanden ist, der Platz für eine Verformung der Führungsbords bei Verformung der Welle 102 bietet. Der Spalt 204 ist dabei U-förmig ausgebildet. Der Spalt 204 kann beispielsweise eine axiale Abmessung 206 aufweisen, wie es in Zusammenhang mit Fig. 1 beschrieben ist.

Einige Ausführungsbeispiele beziehen sich auf eine Kegelrollenlageranordnung in X-Anordnung. Dabei kann ein Spalt zwischen zwei Kegelrollenlagern in X-Anordnung ausgebildet werden, der verhindert, dass die benachbarten Borde der Lager bei Biegung der Welle, auf der die Innenringe sitzen, aufeinander drücken. Mit anderen Worten, durch den Spalt kann z.B. eine Berührung zwischen den Führungsborden bei Verformung der Welle verhindert werden. Dadurch kann die Lagerlebensdauer erhöht werden. Beispielsweise kann das beschriebene Konzept Anwendung bei Windkraftanlagen finden.

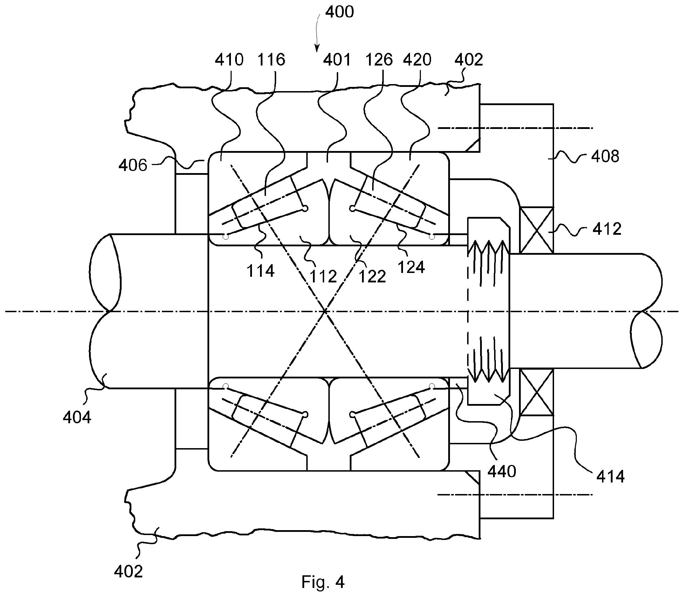

Fig. 4 zeigt eine schematische Darstellung einer Lageranordnungen 400 mit zwei Wälzlagern entsprechend einem Ausführungsbeispiel. Die Lageranordnung 400 entspricht im Wesentlichen dem Aufbau der Lageranordnung aus Fig. 1 oder 2, sodass dementsprechend auch die vorherigen Ausführungen gelten. Die Kegelrollenlager 410, 420 weisen axial aneinander anliegende Innenringe 112, 122 und mit einem Gehäuse 402 verbundene Außenringe (Lageraußenringe) auf. Ferner weisen die Lager kegelförmige Wälzkörper 116, 126 (Rollen) auf. Die Kegelrollenlager sind dabei in einer X-Anordnung zueinander auf einer Welle 404 angeordnet. Die Innenringe der Kegelrollenlager sind zwischen einem axialen Anschlag der Welle 404 und einer Distanzscheibe 440 zur Vorspannung des Lagers angeordnet. Die Außenringe der Kegelrollenlager sind zwischen einem Befestigungsbord des Lagers (des Gehäuses) 406 und einer Außenringbefestigung 408 angeordnet. Zwischen der Außenringbefestigung 408 und der Welle kann eine Dichtung 412 angeordnet werden. Über eine Schraube 414 kann eine Vorspannung über die Distanzscheibe 440 auf das Lager ausgeübt werden. Dazu kann die Welle 404 im Bereich der Schraube 414 ein Gewinde aufweisen.

Einige Ausführungsbeispiele beziehen sich auf eine Windkraftanlage mit einer Lageranordnung nach dem beschriebenen Konzept oder einem der zuvor beschriebenen Ausführungsbeispiele.

Einige weitere Ausführungsbeispiele beziehen sich auf ein Verfahren zur Herstellung einer Lageranordnung mit einem ersten Wälzlager, einem zweiten Wälzlager und einem Zwischenring nach dem zuvor beschriebenen Konzept oder einem der Ausführungsbeispiele. Beispielsweise kann bei zumindest einem Innenring der beiden Wälzlager (oder bei beiden Innenringen) eine Aussparung durch Schleifen, Drehen, Fräsen oder ähnliches erzeugt werden, sodass außerhalb des Kontaktflächendurchmessers zwischen den beiden Innenringen ein Spalt vorhanden ist, wenn die beiden Innenringe aneinander anliegen.

Einige Ausführungsbeispiel beziehen sich auf eine X-Anordnung mit V-Nut. Der Innenring (oder die Innenringe) können im Bereich des Bords durch eine Aussparung freigestellt werden. Die Aussparung kann beispielsweise durch Schleifen, Drehen, Fräsen oder ähnliches erzeugt werden. Die Freistellung kann einseitig oder beidseitig, V-förmig als Nut oder U-förmig implementiert werden. Bei einer V-Form ist im Bereich des Fußes des Bords, in welchem dieser die geringste Materialstärke aufweist, die Schwächung durch die Ausnehmung beispielsweise minimal.

Durch das beschriebene Konzept können beispielsweise Umlaufspannungen aufgrund von Biegungen der Welle bei einer X-Anordnung von Kegelrollenlagern (TRB, tapered roller bearing) reduziert und/oder eliminiert werden.

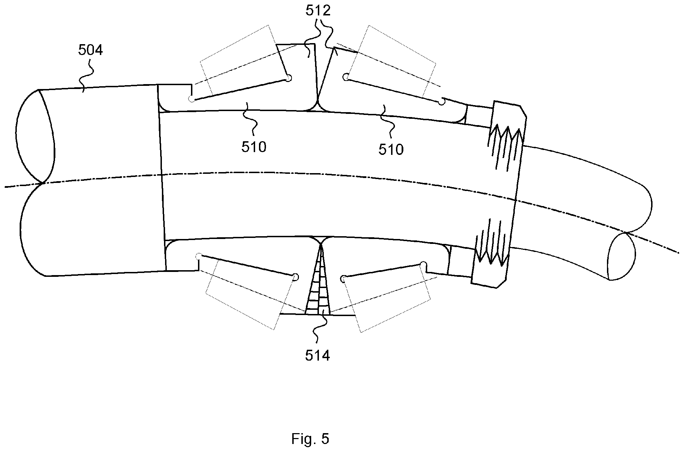

Fig. 5 zeigt ein Beispiel, wie es bei einer Verbiegung einer Welle 504 auf einer Seite zu einer Spaltbildung (oder Bildung einer Öffnung) zwischen den Innenringen 510 und/oder den Führungsborden 512 der Innenringe 510 kommen kann und auf der gegenüberliegenden Seite die Führungsborde 512 gegenseitig einen Druck 514 aufeinander ausüben können, sodass es zur Verformung der Führungsborde 512 kommen kann, wenn kein Spalt nach dem beschriebenen Konzept oder wie in einem der Ausführungsbeispiele vorgesehen ist. Durch die Verformung der Führungsborde 512 können diese einen erhöhten Druck auf die Wälzkörper der Lageranordnung ausüben und so einen erhöhten Verschleiß und eine Verringerung der Lagerlebensdauer verursachen. Beispielsweise kann es zu Reibungskorrosion kommen.

Durch den gegenseitigen Druck 514 kann es auch beispielsweise zu einer plastischen Verformung des Bords kommen, woraus eine Ablaufstörung im Lager (Verschleiß) folgen kann.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichenliste

- 100: Lageranordnung
- 102: Welle
- 104: Spalt
- 110: erstes Wälzlager
- 112: Innenring des ersten Wälzlagers
- 114: Lauffläche des Innenrings des ersten Wälzlagers
- 116: Wälzkörper des ersten Wälzlagers
- 120: zweites Wälzlager
- 122: Innenring des zweiten Wälzlagers
- 124: Lauffläche des Innenrings des zweiten Wälzlagers
- 126: Wälzkörper des zweiten Wälzlagers
- 132: Kontaktflächendurchmesser
- 150: axialer Anschlag
- 160: Distanzscheibe
- 170: Schraube
- 200: Lageranordnung
- 204: Spalt
- 206: axiale Abmessung des Spalts
- 218: Führungsbord des ersten Wälzlagers
- 228: Führungsbord des zweiten Wälzlagers
- 302: unbelasteter Zustand der Welle
- 304: mittige Belastung der Welle
- 310: Lageranordnung
- 320: Welle
- 330: rotierende Masse
- 400: Lageranordnung
- 402: Gehäuse
- 404: Welle
- 406: Befestigungsbord des Lagers
- 408: Außenringbefestigung
- 410: erstes Wälzlager
- 412: Dichtung
- 414: Schraube
- 420: zweites Wälzlager
- 440: Distanzscheibe
- 504: Welle
- 510: Innenring
- 512: Führungsbord
- 514: Druck

## Patentansprüche

1. Lageranordnung (100, 200, 400) mit folgenden Merkmalen:
einem ersten Wälzlager (110) mit einem Innenring (112), der mit einer Welle (102) verdrehfest verbindbar ist, wobei der Innenring (112) des ersten Wälzlagers (110) eine Lauffläche (114) für Wälzkörper (116) des ersten Wälzlagers (110) aufweist; und
einem zweiten Wälzlager (120) mit einem Innenring (122), der mit der Welle (102) verdrehfest verbindbar ist, wobei der Innenring (122) des zweiten Wälzlagers (120) eine Lauffläche (124) für Wälzkörper (126) des
zweiten Wälzlagers (120) aufweist
wobei der Innenring (112) des ersten Wälzlagers (110) ein Führungsbord aufweist, das sich radial über die Lauffläche (114) des Innenrings (112) des ersten Wälzlagers (110) hinaus erstreckt und ausgebildet ist, um eine Bewegung der Wälzkörper (116) des ersten Wälzlagers (110) axial zu begrenzen, wobei der Innenring (122) des zweiten Wälzlagers (120) ein Führungsbord aufweist, das sich radial über die Lauffläche (116) des Innenrings (122) des zweiten Wälzlagers (120) hinaus erstreckt und ausgebildet ist, um eine Bewegung der Wälzkörper (126) des zweiten Wälzlagers (120) axial zu begrenzen,
wobei das Führungsbord des Innenrings (112) des ersten Wälzlagers (110) und das Führungsbord des Innenrings (122) des zweiten Wälzlagers (120) an axial einander zugewandten Seiten der Innenringe des ersten Wälzlagers (110) und des zweiten Wälzlagers (120) angeordnet sind,
dadurch gekenntzeichnet, dass
der Innenring (112) des ersten Wälzlagers (110) und der Innenring (122) des zweiten Wälzlagers (120) ausgebildet sind, sodass der Innenring (112) des ersten Wälzlagers (110) und der Innenring (122) des zweiten Wälzlagers (120) ausschließlich innerhalb eines Kontaktflächendurchmessers (132) miteinander in Kontakt sind, der kleiner ist als ein Mittelwert eines maximalen Durchmessers der Lauffläche (114) des Innenrings (112) des ersten Wälzlagers (110) und eines maximalen Außendurchmessers des Innenrings (112) des ersten Wälzlagers (110) und kleiner ist als ein Mittelwert eines maximalen Durchmessers der Lauffläche (124) des Innenrings (122) des zweiten Wälzlagers (120) und eines maximalen Außendurchmessers des Innenrings (122) des zweiten Wälzlagers (120), wenn der Innenring (112) des ersten Wälzlagers (110) und der Innenring (122) des zweiten Wälzlagers (120) direkt aneinander angrenzend angeordnet sind.

2. Lageranordnung gemäß Anspruch 1, wobei der Innenring (112) des ersten Wälzlagers (110) und der Innenring (122) des zweiten Wälzlagers (120) ausgebildet sind, sodass ein maximaler axialer Abstand zwischen dem Innenring (112) des ersten Wälzlagers (110) und dem Innenring (122) des zweiten Wälzlagers (120) radial außerhalb des Kontaktflächendurchmessers (132) kleiner ist als eine radiale Abmessung einer Kontaktfläche zwischen dem Innenring (112) des ersten Wälzlagers (110) und dem Innenring (122) des zweiten Wälzlagers (120), wenn der Innenring (112) des ersten Wälzlagers (110) und der Innenring (122) des zweiten Wälzlagers (120) direkt aneinander angrenzend angeordnet sind.

3. Lageranordnung gemäß Anspruch 2, wobei der Innenring (112) des ersten Wälzlagers (110) und der Innenring (122) des zweiten Wälzlagers (120) ausgebildet sind, sodass der maximale axiale Abstand zwischen dem Innenring (112) des ersten Wälzlagers (110) und dem Innenring (122) des zweiten Wälzlagers (120) radial außerhalb des Kontaktflächendurchmessers (132) kleiner ist als 10% der radialen Abmessung der Kontaktfläche zwischen dem Innenring (112) des ersten Wälzlagers (110) und dem Innenring (122) des zweiten Wälzlagers (120), wenn der Innenring (112) des ersten Wälzlagers (110) und der Innenring (122) des zweiten Wälzlagers (120) direkt aneinander angrenzend angeordnet sind.

4. Lageranordnung gemäß einem der vorhergehenden Ansprüche, wobei der Innenring (112) des ersten Wälzlagers (110) und der Innenring (122) des zweiten Wälzlagers (120) ausgebildet sind, sodass der Innenring (112) des ersten Wälzlagers (110) und der Innenring (122) des zweiten Wälzlagers (120) radial außerhalb des Kontaktflächendurchmessers (132) einen V-förmig, U-förmig oder rechteckförmig axialen Spalt bilden, wenn der Innenring (112) des ersten Wälzlagers (110) und der Innenring (122) des zweiten Wälzlagers (120) direkt aneinander angrenzend angeordnet sind.

5. Lageranordnung gemäß einem der vorhergehenden Ansprüche, wobei das erste Wälzlager (110) und das zweite Wälzlager (120) vom selben Lagertyp sind.

6. Lageranordnung gemäß einem der vorhergehenden Ansprüche, wobei das erste Wälzlager (110) und das zweite Wälzlager (120) Kegelrollenlager sind.

7. Lageranordnung gemäß Anspruch 6, wobei das erste Wälzlager (110) und das zweite Wälzlager (120) in einer X-Anordnung angeordnet sind.

8. Lageranordnung gemäß einem der vorhergehenden Ansprüche, wobei das erste Wälzlager (110) und das zweite Wälzlager (120) in axialer Richtung symmetrisch zueinander konstruiert sind.

9. Windkraftanlage mit einer Lageranordnung nach einem der vorhergehenden Ansprüche.

## Claims

1. Bearing arrangement (100, 200, 400) having the following features:
a first anti-friction bearing (110) with an inner ring (112) which can be connected fixedly to a shaft (102) so as to rotate with it, the inner ring (112) of the first anti-friction bearing (110) having a raceway (114) for rolling bodies (116) of the first anti-friction bearing (110); and
a second anti-friction bearing (120) with an inner ring (122) which can be connected fixedly to the shaft (102) so as to rotate with it, the inner ring (122) of the second anti-friction bearing (120) having a raceway (124) for rolling bodies (126) of the second anti-friction bearing (120),
the inner ring (112) of the first anti-friction bearing (110) having a guide rim which extends radially beyond the raceway (114) of the inner ring (112) of the first anti-friction bearing (110) and being configured to axially limit a movement of the rolling bodies (116) of the first anti-friction bearing (110), the inner ring (122) of the second anti-friction bearing (120) having a guide rim which extends radially beyond the raceway (116) of the inner ring (122) of the second anti-friction bearing (120) and being configured to axially limit a movement of the rolling bodies (126) of the second anti-friction bearing (120),
the guide rim of the inner ring (112) of the first anti-friction bearing (110) and the guide rim of the inner ring (122) of the second anti-friction bearing (120) being arranged on sides of the inner rings of the first anti-friction bearing (110) and the second anti-friction bearing (120) which face one another axially,
**characterized in that**
the inner ring (112) of the first anti-friction bearing (110) and the inner ring (122) of the second anti-friction bearing (120) are configured such that the inner ring (112) of the first anti-friction bearing (110) and the inner ring (122) of the second anti-friction bearing (120) are in contact with one another exclusively within a contact area diameter (132) which is smaller than a mean value of a maximum diameter of the raceway (114) of the inner ring (112) of the first anti-friction bearing (110) and a maximum external diameter of the inner ring (112) of the first anti-friction bearing (110), and is smaller than a mean value of a maximum diameter of the raceway (124) of the inner ring (122) of the second anti-friction bearing (120) and a maximum external diameter of the inner ring (122) of the second anti-friction bearing (120) when the inner ring (112) of the first anti-friction bearing (110) and the inner ring (122) of the second anti-friction bearing (120) are arranged so as to adjoin one another directly.

2. Bearing arrangement according to Claim 1, the inner ring (112) of the first anti-friction bearing (110) and the inner ring (122) of the second anti-friction bearing (120) being configured such that a maximum axial spacing between the inner ring (112) of the first anti-friction bearing (110) and the inner ring (122) of the second anti-friction bearing (120) radially outside the contact area diameter (132) is smaller than a radial dimension of a contact area between the inner ring (112) of the first anti-friction bearing (110) and the inner ring (122) of the second anti-friction bearing (120) when the inner ring (112) of the first anti-friction bearing (110) and the inner ring (122) of the second anti-friction bearing (120) are arranged so as to adjoin one another directly.

3. Bearing arrangement according to Claim 2, the inner ring (112) of the first anti-friction bearing (110) and the inner ring (122) of the second anti-friction bearing (120) being configured such that the maximum axial spacing between the inner ring (112) of the first anti-friction bearing (110) and the inner ring (122) of the second anti-friction bearing (120) radially outside the contact area diameter (132) is smaller than 10% of the radial dimension of the contact area between the inner ring (112) of the first anti-friction bearing (110) and the inner ring (122) of the second anti-friction bearing (120) when the inner ring (112) of the first anti-friction bearing (110) and the inner ring (122) of the second anti-friction bearing (120) are arranged so as to adjoin one another directly.

4. Bearing arrangement according to one of the preceding claims, the inner ring (112) of the first anti-friction bearing (110) and the inner ring (122) of the second anti-friction bearing (120) being configured such that the inner ring (112) of the first anti-friction bearing (110) and the inner ring (122) of the second anti-friction bearing (120) radially outside the contact area diameter (132) form a V-shaped, U-shaped or rectangular axial gap when the inner ring (112) of the first anti-friction bearing (110) and the inner ring (122) of the second anti-friction bearing (120) are arranged so as to adjoin one another directly.

5. Bearing arrangement according to one of the preceding claims, the first anti-friction bearing (110) and the second anti-friction bearing (120) being of the same bearing type.

6. Bearing arrangement according to one of the preceding claims, the first anti-friction bearing (110) and the second anti-friction bearing (120) being tapered roller bearings.

7. Bearing arrangement according to Claim 6, the first anti-friction bearing (110) and the second anti-friction bearing (120) being arranged in an X-arrangement.

8. Bearing arrangement according to one of the preceding claims, the first anti-friction bearing (110) and the second anti-friction bearing (120) being constructed so as to be symmetrical with respect to one another in the axial direction.

9. Wind power plant having a bearing arrangement according to one of the preceding claims.

## Revendications

1. Système de palier (100, 200, 400) présentant les caractéristiques suivantes:
un premier palier à roulement (110) avec une bague intérieure (112), qui peut être calée en rotation sur un arbre (102), dans lequel la bague intérieure (112) du premier palier à roulement (110) présente une face de roulement (114) pour des corps de roulement (116) du premier palier à roulement (110); et
un deuxième palier à roulement (120) avec une bague intérieure (122), qui peut être calée en rotation sur l'arbre (102), dans lequel la bague intérieure (122) du deuxième palier à roulement (120) présente une face de roulement (124) pour des corps de roulement (126) du deuxième palier à roulement (120),
dans lequel la bague intérieure (112) du premier palier à roulement (110) présente un bord de guidage, qui s'étend radialement au-delà de la face de roulement (114) de la bague intérieure (112) du premier palier à roulement (110) et qui est configuré pour limiter axialement un déplacement des corps de roulement (116) du premier palier à roulement (110), dans lequel la bague intérieure (122) du deuxième palier à roulement (120) présente un bord de guidage, qui s'étend radialement au-delà de la face de roulement (116) de la bague intérieure (122) du deuxième palier à roulement (120) et qui est configuré pour limiter axialement un déplacement des corps de roulement (126) du deuxième palier à roulement (120),
dans lequel le bord de guidage de la bague intérieure (112) du premier palier à roulement (110) et le bord de guidage de la bague intérieure (122) du deuxième palier à roulement (120) sont disposés sur des côtés tournés axialement l'un vers l'autre des bagues intérieures du premier palier à roulement (110) et du deuxième palier à roulement (120),
**caractérisé en ce que** la bague intérieure (112) du premier palier à roulement (110) et la bague intérieure (122) du deuxième palier à roulement (120) sont réalisées de telle manière que la bague intérieure (112) du premier palier à roulement (110) et la bague intérieure (122) du deuxième palier à roulement (120) soient en contact l'une avec l'autre exclusivement à l'intérieur d'un diamètre de faces de contact (132), qui est plus petit qu'une valeur moyenne d'un diamètre maximal de la face de roulement (114) de la bague intérieure (112) du premier palier à roulement (110) et d'un diamètre extérieur maximal de la bague intérieure (112) du premier palier à roulement (110) et est plus petit qu'une valeur moyenne d'un diamètre maximal de la face de roulement (124) de la bague intérieure (122) du deuxième palier à roulement (120) et d'un diamètre extérieur maximal de la bague intérieure (122) du deuxième palier à roulement (120), lorsque la bague intérieure (112) du premier palier à roulement (110) et la bague intérieure (122) du deuxième palier à roulement (120) sont montées de façon directement adjacente l'une à l'autre.

2. Système de palier selon la revendication 1, dans lequel la bague intérieure (112) du premier palier à roulement (110) et la bague intérieure (122) du deuxième palier à roulement (120) sont réalisées de telle manière qu'une distance axiale maximale entre la bague intérieure (112) du premier palier à roulement (110) et la bague intérieure (122) du deuxième palier à roulement (120) radialement à l'extérieur du diamètre des faces de contact (132) soit plus petite qu'une dimension radiale d'une face de contact entre la bague intérieure (112) du premier palier à roulement (110) et la bague intérieure (122) du deuxième palier à roulement (120), lorsque la bague intérieure (112) du premier palier à roulement (110) et la bague intérieure (122) du deuxième palier à roulement (120) sont montées de façon directement adjacente l'une à l'autre.

3. Système de palier selon la revendication 2, dans lequel la bague intérieure (112) du premier palier à roulement (110) et la bague intérieure (122) du deuxième palier à roulement (120) sont réalisées de telle manière que la distance axiale maximale entre la bague intérieure (112) du premier palier à roulement (110) et la bague intérieure (122) du deuxième palier à roulement (120) radialement à l'extérieur du diamètre des faces de contact (132) soit plus petit que 10 % de la dimension radiale de la face de contact entre la bague intérieure (112) du premier palier à roulement (110) et la bague intérieure (122) du deuxième palier à roulement (120), lorsque la bague intérieure (112) du premier palier à roulement (110) et la bague intérieure (122) du deuxième palier à roulement (120) sont montées de façon directement adjacente l'une à l'autre.

4. Système de palier selon l'une quelconque des revendications précédentes, dans lequel la bague intérieure (112) du premier palier à roulement (110) et la bague intérieure (122) du deuxième palier à roulement (120) sont réalisées de telle manière que la bague intérieure (112) du premier palier à roulement (110) et la bague intérieure (122) du deuxième palier à roulement (120) radialement à l'extérieur du diamètre des faces de contact (132) forment une fente axiale en forme de V, en forme de U ou de forme rectangulaire, lorsque la bague intérieure (112) du premier palier à roulement (110) et la bague intérieure (122) du deuxième palier à roulement (120) sont montées de façon directement adjacente l'une à l'autre.

5. Système de palier selon l'une quelconque des revendications précédentes, dans lequel le premier palier à roulement (110) et le deuxième palier à roulement (120) sont du même type de palier.

6. Système de palier selon l'une quelconque des revendications précédentes, dans lequel le premier palier à roulement (110) et le deuxième palier à roulement (120) sont des paliers à rouleaux coniques.

7. Système de palier selon la revendication 6, dans lequel le premier palier à roulement (110) et le deuxième palier à roulement (120) sont disposés selon un arrangement en X.

8. Système de palier selon l'une quelconque des revendications précédentes, dans lequel le premier palier à roulement (110) et le deuxième palier à roulement (120) sont conçus de façon symétrique l'un à l'autre en direction axiale.

9. Eolienne comportant un système de palier selon l'une quelconque des revendications précédentes.
